# DEMANDE DE BREVET EUROPEEN

(11) **EP 2 296 126 A1**
(43) Date de publication de la demande: **16.03.2011**
(21) Numéro de dépôt: 10175838.1
(22) Date de dépôt: 08.09.2010
(51) Int. Cl.: G08G 1/14, G08G 1/0968, B60R 25/10

(54) **Procédé de localisation d'un véhicule à enregistrement automatique du positionnement du véhicule au verrouillage de ce dernier**

(30) Priorité: 15.09.2009 FR 0904408
(71) Demandeur: Valeo Sécurité Habitacle, 94046 Créteil Cedex (FR)
(72) Inventeur: Menard, Eric, 94046, CRETEIL CEDEX (FR)
(74) Mandataire: Jacquot, Ludovic R. G.

(57) **Abrégé**

L'invention concerne un procédé de localisation de véhicule (10) automobile dans lequel on utilise un appareil portable doté d'une mémoire, lequel procédé comprend une étape d'enregistrement dans la mémoire d'un positionnement du véhicule (10) pour un calcul de positionnement relatif du véhicule (10) par rapport à l'appareil, le procédé étant **caractérisé en ce que** l'étape d'enregistrement du positionnement du véhicule (10) est déclenchée de manière automatique lors d'un changement d'état du véhicule (10) de l'état déverrouillé à l'état verrouillé.

## Description

L'invention concerne la localisation de son propre véhicule par un utilisateur d'un tel véhicule.

On sait combien il peut être difficile de retrouver de mémoire son véhicule sur un parking de supermarché ou de centre commercial. On sait également que diverses solutions techniques ont été proposées à cet effet, et notamment leur intégration dans une télécommande de véhicule automobile.

Parmi celles-ci, on a proposé d'utiliser un calculateur apte à bâtir et mémoriser en temps réel le parcours effectué depuis le débarquement hors du véhicule jusqu'à l'instant présent. Le calcul de ce trajet peut être effectué à l'aide d'une base cartographique embarquée dans l'appareil, ou sans base cartographique. Dans le premier cas, on indique alors préférentiellement un trajet à effectuer sous la forme d'un tracé sur une carte affichée à l'écran de l'appareil. Dans le second cas, l'appareil ayant un moyen permettant d'obtenir une référence en orientation cardinale, on se contente d'afficher à l'écran de l'appareil une direction à suivre pour se rapprocher du véhicule, avec par exemple une estimation de la distance séparant l'appareil du véhicule.

Un tel calcul du trajet de retour au véhicule peut typiquement être effectué par deux types de moyens. Selon le premier type, l'appareil de localisation est un récepteur GPS - Global Positioning System - en anglais, plus généralement un appareil de localisation par satellites. L'appareil est apte à connaître sa propre localisation à tout instant, et il suffit d'avoir mémorisé dans l'appareil les coordonnées de la position du véhicule. Cette mémorisation s'effectue par exemple dans un menu d'un tel appareil lequel menu offre à l'utilisateur la possibilité de mémoriser sa position actuelle. L'utilisateur déclenche donc une telle mémorisation de localisation à sa sortie du véhicule.

Selon le second type d'appareil de localisation calcule un trajet effectué depuis le départ hors du véhicule par utilisation d'un accéléromètre et d'une boussole embarqués dans l'appareil. Les déplacements de la personne portant l'appareil sont additionnés de manière incrémentale pour établir ce trajet, là encore en référence à une base cartographique présente dans la mémoire de l'appareil, ou simplement en référence à la boussole embarquée pour indiquer la direction de retour et la distance à parcourir.

Ces différents moyens ont été proposés dans des télécommandes d'ouverture de portes de véhicules automobiles ou dans des téléphones portables. Néanmoins, ils présentent certains inconvénients en termes d'ergonomie et de coût. En effet, les moyens de calcul nécessaires au calcul du trajet d'éloignement ou de retour sont onéreux en eux-mêmes et nécessitent en outre d'aménager un écran adapté pour une lecture imagée des indications de localisation. De plus le déclenchement de la mémorisation de l'emplacement du véhicule nécessite de naviguer dans des menus complexes, ce qui tend à dissuader les utilisateurs d'utiliser la fonctionnalité de localisation.

Le but de l'invention est de proposer une solution à ces différents problèmes. Ce but est atteint selon l'invention grâce à l'objet de la revendication 1.

D'autres caractéristiques, buts et avantages apparaîtront à la lecture de la description détaillée qui va suivre, faite en référence aux figures annexées sur lesquelles :
- la figure 1 illustre un premier exemple d'architecture selon l'invention,
- la figure 2 illustre un deuxième exemple d'architecture selon l'invention,

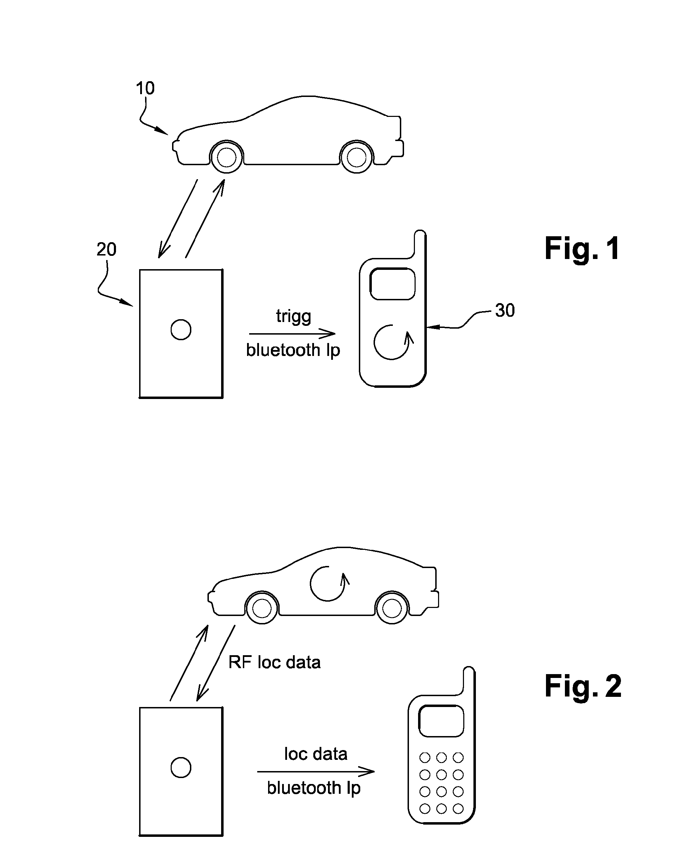

L'invention va être plus avant décrite à l'aide de diagrammes représentatifs d'architectures préférées. L'architecture de la figure 1 s'articule autour d'un véhicule automobile 10, d'une télécommande 20 de verrouillage et déverrouillage du véhicule, et d'un téléphone portable 30 distinct physiquement de la télécommande 20.

La télécommande 20 est en liaison par radiofréquences avec un système central de communication du véhicule 10, selon une liaison ici bidirectionnelle de moyenne portée. Une telle moyenne portée est ici de l'ordre de 300 mètres. Elle permet la transmission de commandes classiques de verrouillage et de déverrouillage des portes du véhicule, et d'identification de la télécommande à cet effet.

Cette liaison permet également la transmission de données d'information depuis le véhicule vers la télécommande, telles que température de l'habitacle, charge restante de la batterie, pression des pneus, état verrouillé ou déverrouillé des portes du véhicule, alerte d'intrusion dans le véhicule.

Cette liaison permet également la transmission d'ordres de la télécommande vers le véhicule, tels qu'un ordre de mise en route du moteur du véhicule ou un ordre de mise en route d'un équipement de chauffage ou de climatisation du véhicule, un ordre d'ouverture des fenêtres, un ordre de préréglage des sièges et rétroviseurs du véhicule.

Le téléphone portable 30 est quant a lui un téléphone équipé de moyens pour une communication autre et additionnelle à la communication sur réseau téléphonique. Ces moyens additionnels peuvent être des moyens de communication à courte distance - Near Field Communication ou NFC en anglais- ou des moyens de communication à moyenne distance comme la communication Bluetooth.

Le téléphone 30 comporte en outre un processeur qui exécute un applicatif de positionnement par données satellites selon notamment le Global Positioning Système ou GPS selon la dénomination anglaise. Un tel applicatif permet au téléphone, de manière bien connue, d'autodéterminer et d'afficher la position actuelle du téléphone sur une carte stockée en mémoire, et d'afficher la position sur cette même carte d'un point d'intérêt identifié préalablement sur cette carte, telle qu'une destination ou encore une position antérieure du téléphone lorsque le système est utilisé pour se diriger en retour vers cette position antérieure.

La télécommande 20 est elle-même équipée d'un module de communication de données par une liaison à courte ou à moyenne distance, tels que NFC, Bluetooth ou encore selon le protocole IEEE 802.11.

Lors d'une opération de verrouillage déclenchée par le porteur de la télécommande 20, celle-ci initié le module de communication bluetooth de la télécommande pour un envoi au téléphone portable d'un ordre de calcul de position GPS et d'enregistrement du résultat de ce calcul.

Le téléphone est préalablement apparié à la télécommande par simple proximité avec celle-ci, ou encore apparié spécifiquement à l'effet de l'envoi de cet ordre. Ce dernier avantage est obtenu par l'utilisation du protocole bluetooth low energy, qui de ce fait permet d'économiser la durée de vie de la batterie de la télécommande 20 et de ne communiquer qu'à l'effet de la transmission utile dans la présente variante.

Le téléphone 30, recevant cet ordre de calcul et d'enregistrement du résultat du calcul, lance alors son applicatif GPS embarqué, détermine sa position dans le référentiel terrestre, et enregistre cette position dans sa mémoire.

Ultérieurement, l'applicatif de localisation du téléphone détermine la position du téléphone à cet instant ultérieur, et affiche sur une carte cette position ultérieure ainsi que la position enregistrée du téléphone à la sortie du véhicule.

Selon le mode de réalisation illustré à la figure 2, le positionnement est calculé par le véhicule. Il est ici calculé à partir d'une combinaison de données satellites et de données de rotation des roues. Le véhicule prend en compte les données satellite obtenues jusqu'à une éventuelle coupure de la couverture satellite, comme c'est le cas lors d'une entrée dans un parking couvert ou souterrain. Il extrapole ensuite la position obtenue par ces dernières données satellite avec les données de rotation des roues couplées à d'éventuelles données d'orientation des roues avant, pour extrapoler cette dernière position avec le déplacement du véhicule effectué depuis cette dernière position. Un tel calcul embarqué sur le véhicule présente donc l'avantage de pouvoir indiquer la position du véhicule y compris dans des zones situées hors de couverture GPS.

Lors d'une opération de verrouillage déclenchée par le porteur de la télécommande 20, celle-ci initie un module de communication radiofréquence du véhicule pour un envoi au téléphone portable des données de positionnement du véhicule précédemment calculées par satellite. néanmoins les données de positionnement sont réceptionnées par l'identifiant via une telle liaison radio fréquences ou encore par un liaison bluetooth low power puis retransmises par l'identifiant 20 au téléphone portable 30. La liaison entre l'identifiant et le téléphone portable 30 est par exemple une liaison bluetooth, préférentiellement bluetooth low power ou encore une liaison très courte portée c'est-à-dire notamment une liaison NFC ou near field communication en anglais. L'identifiant fonctionne alors en passerelle entre le véhicule 10 et le téléphone 30.

Le positionnement est ici calculé par le véhicule lors du roulage et le véhicule mémorise automatiquement la dernière position calculée lors de l'extinction du moteur ou lors de la coupure d'alimentation des accessoires du véhicule.

Cette donnée mémorisée est donc transmise au téléphone portable de manière automatique simultanément au passage a l'état verrouille du véhicule.

En variante, l'ordre de verrouillage du véhicule est pris en compte par le véhicule pour déclencher, à la réception de cet ordre de verrouillage, le calcul du positionnement du véhicule. Ce calcul est alors effectué en fonction de données satellite ou en fonction de données satellites complétées de données de roulage du véhicule mémorisées par le véhicule.

Les données sont transférées du véhicule vers le téléphone portable par une transmission à l'identifiant puis préférentiellement par une liaison bluetooth low energy selon la terminologie consacrée- bluetooth basse energie en français
- dont l'avantage est de n'ouvrir une liaison qu'à l'apparition de données à transmettre, ici les données de positionnement calculées par le véhicule.

Selon ce mode de réalisation représenté, l'ordre de verrouillage envoyé par l'identifiant au véhicule est interprété par celui-ci également comme un ordre de transmission des données de positionnement calculées a bord du véhicule.

Les exemples de réalisation décrits ci-avant font usage d'un calcul de positionnement du véhicule relativement au téléphone portable pour usage de coordonnées terrestres obtenues par références à des positions de satellites.

Toutefois, d'autres méthodes de calcul du positionnement relatif peuvent être mis en oeuvre, établissant un positionnement relatif par sommation d'une série d'incrément d'accélération et d'orientation du téléphone portable ou de l'identifiant entre deux instants, notamment entre l'instant de verrouillage et l'instant de consultation de la position relative.

L'appareil alors comporte une zone mémoire de stockage de données de positionnement relatif du véhicule par rapport à l'appareil, et l'enregistrement du positionnement du véhicule consiste en une réinitialisation de la zone mémoire dédiée au stockage des données de positionnement relatif du véhicule par rapport à l'appareil.

Les données ainsi stockées de positionnement relatif du véhicule par rapport à l'appareil peuvent être un résultat en temps réel du calcul de positionnement relatif, fait à partir d'une série d'accélération et d'orientations captées au fil de l'eau, ou encore les de positionnement relatif ainsi stockées peuvent être une telle série d'accélérations et d'orientations saisies dans la mémoire au fil de l'eau.

Autrement dit, les données de positionnement relatif peuvent être un résultat d'intégration des valeurs captées, ou les valeurs captées elles-mêmes, ou encore un ensemble des deux. L'enregistrement du positionnement du véhicule au verrouillage, du fait que le positionnement est dans ce cas un positionnement relatif, consisté ici en une réinitialisation d'un registre dédié au stockage des données de positionnement relatif du véhicule par rapport au téléphone, données qui peuvent être le résultat de l'intégration d'incréments d'accélérations et d'orientation, ou bien la série des valeurs d'accélération et d'orientation elles même formant cette série d'incréments, avant leur intégration.

Le positionnement relatif peut également être un ensemble des deux, par exemple un résultat antérieur de l'intégration d'incréments d'accélérations et d'orientation suivi d'une série d'incréments d'accélérations et d'orientation prélevés depuis le positionnement relatif correspondant au résultat antérieur d'intégration de tels incréments.

Le positionnement relatif calculé du véhicule par rapport à l'appareil est un positionnement au moins angulaire dans un référentiel en orientation de l'appareil. La distance entre téléphone et véhicule peut ne pas être indiquée dans certains cas. Ainsi, le positionnement relatif du véhicule peut être une indication de direction à suivre pour se diriger vers le véhicule.

On a décrit ici une mémorisation du positionnement de véhicule à l'instant du verrouillage par mémorisation dans le téléphone portable, de la position même du véhicule ou de la position du téléphone portable à proximité du véhicule à cet instant.

Bien entendu, l'identifiant décrit ici peut être une télécommande de verrouillage/déverrouillage par pression de touches ou un badge de type « mains-libres », qui envoit des données d'identification sous la forme d'une réponse à une requête d'identification de la part du véhicule, requête elle-même déclenchée sans nécessité de manipuler l'identifiant.

## Revendications

1. Procédé de localisation de véhicule (10) automobile dans lequel on utilise un appareil portable doté d'une mémoire, lequel procédé comprend une étape d'enregistrement dans la mémoire d'un positionnement du véhicule (10) pour un calcul de positionnement relatif du véhicule (10) par rapport à l'appareil, le procédé comprenant l'étape d'enregistrement du positionnement du véhicule (10) est déclenchée de manière automatique lors d'un changement d'état du véhicule (10) de l'état déverrouillé à l'état verrouillé, **caractérisé en ce que** le déclenchement automatique de la mémorisation consiste en l'émission par un identifiant portable (20) de verrouillage/déverrouillage du véhicule (10) automobile d'un ordre d'enregistrement à l'appareil portable (30) par une liaison directe entre l'identifiant portable (20) de verrouillage/déverrouillage de véhicule (10) automobile et l'appareil portable (30).

2. Procédé selon la revendication 1, **caractérisé en ce que** le positionnement du véhicule (10) est une coordonnée de positionnement absolue obtenue par satellite.

3. Procédé selon la revendication 1, **caractérisé en ce que** l'appareil portable comporte une zone mémoire de stockage de données de positionnement relatif du véhicule (10) par rapport à l'appareil, et **en ce que** l'enregistrement du positionnement du véhicule (10) consiste en une réinitialisation de la zone mémoire dédiée au stockage des données de positionnement relatif du véhicule (10) par rapport à l'appareil.

4. Procédé selon la revendication 3, **caractérisé en ce que** le positionnement relatif calculé du véhicule (10) par rapport à l'appareil est un positionnement au moins angulaire dans un référentiel en orientation de l'appareil.

5. Procédé selon la revendication 1, **caractérisé en ce qu'**il comprend l'étape consistant à déterminer la position à enregistrer par un processeur embarqué dans l'appareil portable (30) à l'aide de données satellite.

6. Procédé selon la revendication 1, **caractérisé en ce que** la liaison directe entre l'identifiant portable (20) de verrouillage/déverrouillage de véhicule (10) automobile et l'appareil portable (30) est une liaison bluetooth.

7. Procédé selon la revendication précédente, **caractérisé en ce que** la liaison directe entre l'identifiant portable de verrouillage/déverrouillage (20) et l'appareil portable (30) est une liaison connue sous le nom de bluetooth low energy.

8. Procédé selon la revendication 1, **caractérisé en ce qu'**il comprend l'étape consistant à déterminer la position à enregistrer par un calcul effectué par un équipement permanent du véhicule (10) à l'aide de données satellites.

9. Procédé selon la revendication précédente, **caractérisé en ce que** la transmission de la position déterminée est effectuée par une liaison directe entre le véhicule (10) et un identifiant de verrouillage/déverrouillage (20) puis par une liaison directe entre l'identifiant de verrouillage/déverrouillage (20) et l'appareil portable (30).

10. Procédé selon la revendication précédente, **caractérisé en ce que** liaison directe entre l'identifiant de verrouillage/déverrouillage (20) et l'appareil portable (30) est une liaison bluetooth low energy.

11. Procédé selon l'une quelconque des revendications précédentes, **caractérisé en ce que** l'appareil portable est un téléphone portable.
